# EUROPEAN PATENT APPLICATION

(11) **EP 4 350 668 A1**
(43) Date of publication of application: **10.04.2024**
(21) Application number: 22816228.5
(22) Date of filing: 03.06.2022
(51) Int. Cl.: G09B 7/02, A63F 13/80, G06Q 50/20

(54) **INFORMATION PROCESSING DEVICE, INFORMATION PROCESSING PROGRAM, AND INFORMATION PROCESSING METHOD**

(30) Priority: 03.06.2021 JP 2021093410
(71) Applicant: GEOGLYPH.CO.,LTD, Nagareyama-shi, Chiba 2700127 (JP)
(72) Inventor: TABATA, Toyofumi, Nagareyama-shi, Chiba 270-0127 (JP)
(74) Representative: Wittmann, Günther
(86) International application number: PCT/JP2022/022625
(87) International publication number: WO 2022/255483

(57) **Abstract**

It is an object of the present invention to enrich the variation of questions related to images. An information processing device 1 generates a question, transmits the question to a user's user terminal 2, and evaluates the user's answer to that question. The information processing device 1 includes: a theme setting unit 11 for setting a theme for a question; an object acquisition unit 12 for acquiring a plurality of objects collected by the user with respect to the theme that has been set; a question generation unit 13 for generating questions in accordance with the plurality of acquired objects; a question transmission unit 14 for transmitting the generated question to the user terminal 2; a scoring unit 15 for obtaining a user's answer to the question from the user terminal 2, and determining whether the obtained answer is correct. Each of the plurality of objects includes an image, text, and sound representing interrelated contents.

## Description

### Technical Field

The present disclosure relates to an information processing device, an information processing program, and an information processing method.

### Background Technology

A device is known that continuously displays images on a display and generates questions related to the images and further puts forward questions to the user.

For example, Patent Document 1 discloses, as a device for supporting learners' learning, a device for temporarily processing a part of an image representing learning content into an unrecognizable state.

### Prior Art Documents

### Patent Literatures

Patent Document 1: Japanese Patent Laid-Open No.2019-82613

### Summary of the Invention

### Problems to be Solved by the Invention

In such a device as mentioned above, a user can estimate the content of the part in the image that has become invisible, only in accordance with the image. However, under such a condition, since the question and the answer are on the same image, question variation is apt to be limited.

Besides, in school education of recent years, important matters are to collect data by students themselves, properly sort out the collected data, thereby summarizing the learning results. In this case, as a process of further learning, it is necessary to subsequently fix the content of the learning results summarized by oneself as knowledge. However, with the device described in Patent Document 1, although users such as students can solve the questions created by questioners, it is impossible for oneself to independently collect and organize materials in the process of one's learning, nor can it be used to solidify the content of the learning results that one has compiled as knowledge.

Therefore, an information processing device, an information processing program, and an information processing method according to the present disclosure are to make it possible to enrich the variations of image-related questions, allow a user to independently summarize learning results. Further, the purpose of the invention is to make it possible to solidify knowledge using the resulting products summarized by user.

### Means for Solving Problems

An information processing device (1) according to an aspect of the present disclosure is a device (1) for generating and transmitting a question to a user's user terminal (2) and evaluating the user's answer to that question, said device comprising:
a theme setting unit (11) for setting a theme for the question;
an object acquisition unit (12) that acquires a plurality of objects collected by the user regarding the theme set by the theme setting unit (11);
a question generating unit (13) that generates a question based on the plurality of objects acquired by the object acquisition unit (12);
a question transmitting unit (14) that transmits the questions generated by the question generating unit (13) to the user terminal (2), and
a scoring unit (15) that obtains the user's answer to the question from the user terminal (2) and determines whether the obtained answer is correct;
wherein
each of the plurality of objects includes image, text, and sound representing interrelated contents.

The information processing program according to an aspect of the present disclosure is a program for causing a computer (C) to execute a process of generating a question, transmitting the question to a user's user terminal (2), and evaluating the user's answer to the question.

The computer (C) is provided to function as having the following units:
a theme setting unit (11) for setting a theme for the question;
an object acquisition unit (12) to acquire a plurality of objects collected by the user with respect to the theme set by the theme setting unit (11);
   a question generating unit (13) to generate a question based on the plurality of objects acquired by the object acquisition unit (12);
   a question transmitting unit (14) that transmits the questions generated by the question generating unit (13) to the user terminal (2); and
   a scoring unit (15) that obtains the user's answer to the question from the user terminal (2) and determines whether the obtained answer is correct,
   wherein each of the plurality of objects includes image, text, and sound representing interrelated contents.

An information processing method according to an aspect of the present disclosure is a method for generating a question and transmitting the question to a user's user terminal (2) and evaluating the user's answer to such a question,
said method comprising:
a theme setting step for setting a theme for the question;
an object acquisition step for acquiring a plurality of objects collected by the user with respect to the theme set in the theme setting step;
a question generation step that generates a question based on the plurality of objects acquired in the object acquisition step;
a question transmitting step for transmitting the question generated in the question generating step to the user terminal (2);
a scoring step for obtaining the user's answers to the questions from the user terminal (2) and determining whether the obtained answers are correct.
wherein each of the plurality of objects includes an image, text, and sound representing inter-related contents.

According to at least one of information processing device (1), information processing program, and information processing method, a plurality of objects related to a theme that has been set are collected by a user. Then, questions are generated based on the plurality of objects, and the generated questions are presented to the user. When the user's answers to the questions are obtained from the user terminal (2), the correctness of the answers is determined. This makes it possible to obtain the correctness of each user's answers to the questions, making it possible, for example, for users to compete with each other based on the percentage of correct answers and answer times. Here, each object includes an image, text, and sound representing interrelated contents. Therefore, questions and answers to questions can be generated by combining not only images but also text and sound associated with the images.

This makes it possible to create a rich variety of image-related questions. In addition, it is possible for users such as students to collect materials voluntarily and organize the collected materials appropriately to summarize the results of their studies. Additionally, in the process of organizing and summarizing materials, users can be trained to express ideas and information through conceptualization, abstraction, and materialization. Furthermore, by having users compete with each other based on the percentage of correct answers and answer time, the users themselves can enjoy the fun of playing with the game elements, while at the same time consolidating the contents of the results they have compiled as knowledge. Therefore, the information processing device can be used by the user (who is a student) as a learning material, so that the user can voluntarily summarize the results of his/her study, and can use the results summarized by the user to consolidate his/her knowledge.

In the information processing device (1) according to an aspect of the present disclosure, a question may be configured in a format that indicates to the user at least one of text and sound contained in any one of a plurality of objects and causes the user to select an image contained in that object from a plurality of candidate images. In this way, it is possible to generate a question in a format of selecting an appropriate image based on at least one of the text and sound. As an example, it is possible to generate a question in the form of a so-called "karuta".

In the information processing device (1) according to an aspect of the present disclosure, each of the plurality of candidate images may be an image included in each of the plurality of objects. Accordingly, it is possible to specifically realize the actions and effects of the present disclosure described above.

In the information processing device (1) according to an aspect of the present disclosure, the text may include a description of the content of an image. This allows the above-mentioned actions and effects of the present disclosure to be specifically realized.

In the information processing device (1) according to an aspect of the present disclosure, the sound may include a content explaining the content of an image. This enables the above-described actions and effects of the present disclosure to be specifically realized.

In the information processing device (1) according to an aspect of the present disclosure, the sound may include the content of text read out. This enables the above-mentioned actions and effects of the present disclosure to be specifically realize

In the information processing device (1) according to an aspect of the present disclosure, the images included in the plurality of objects may be different from each other, the texts included in the plurality of objects may also be different from each other, and the sounds included in the plurality of objects may also be different from each other. In this way, for example, when at least one of text and sound is a question, an image that is an answer to the question can be determined to be only one.

In the information processing device (1) according to an aspect of the present disclosure, the theme setting unit (11) is capable of setting multiple themes, and the object acquisition unit (12) may acquire multiple objects for each of the multiple themes set by the theme setting unit (11). In this way, it is possible to generate a collection of questions with different questions for each theme.

The information processing device (1) according to an aspect of the present disclosure may further be provided with an answer time acquisition unit (16) that acquires an answer time related to a time period starting from when a question is transmitted to the user terminal (2) by the question transmission unit (14) until the answer content is acquired by the scoring unit (15). In this way, since the answer time taken by the user to answer the question is acquired, a plurality of users can compete with each other in the time required to answer the question.

In the information processing device (1) according to an aspect of the present disclosure, the user includes a facilitator and members, and has a group registration unit (10) that registers the facilitator and members selected by the facilitator as a group. The question transmission unit (14) transmits the question to facilitator terminal (2F) which is the user terminal (2) of the facilitator registered as a group, and member terminal (2M) which is the user terminal (2) of the member registered as the group. Accordingly, by dividing the roles of users into facilitators and members, it is possible to manage groups appropriately.

The reference numerals in parentheses above are the codes of the components in the embodiments described below serving as examples of the present disclosure, but do not limit the present disclosure to the embodiments.

### Effect of the Invention

In this way, the information processing device, the information processing program, and the information processing method according to the present disclosure can enrich the variations of questions related to images. Further, the user can independently summarize the results of learning, and the user can use the learning results compiled by the user to solidify the knowledge.

### Brief Description of Drawings

Fig. 1 is a block diagram showing an information processing device according to an embodiment.
Fig. 2 is a diagram illustrating that a plurality of objects can be acquired for a plurality of themes.
Fig. 3 is a diagram explaining that questions generated in accordance with a plurality of objects are sent to a user terminal.
Fig. 4 is a diagram illustrating an example of an image registration screen for registering the image of an object.
Fig. 5 is a diagram illustrating an example of a text registration screen for registering the text of an object.
Fig. 6 is a diagram illustrating an example of a sound registration screen for registering the sound of an object.
Fig. 7 is a diagram showing an example of a theme list screen that displays set themes together with the number of objects acquired for each theme.
Fig. 8 is a flowchart showing an information registration process executed by the information processing device.
Fig. 9 is a flowchart showing a theme and object registration process executed by the information processing device.
Fig. 10 is a flowchart showing a question generation process executed by the information processing device.

### Embodiments for Carrying out the Invention

Hereinafter, exemplary embodiments will be described with reference to the drawings. Note that the same or corresponding parts in each respective figures are given the same reference numerals, and redundant explanation will be omitted.

### [Overall Structure]

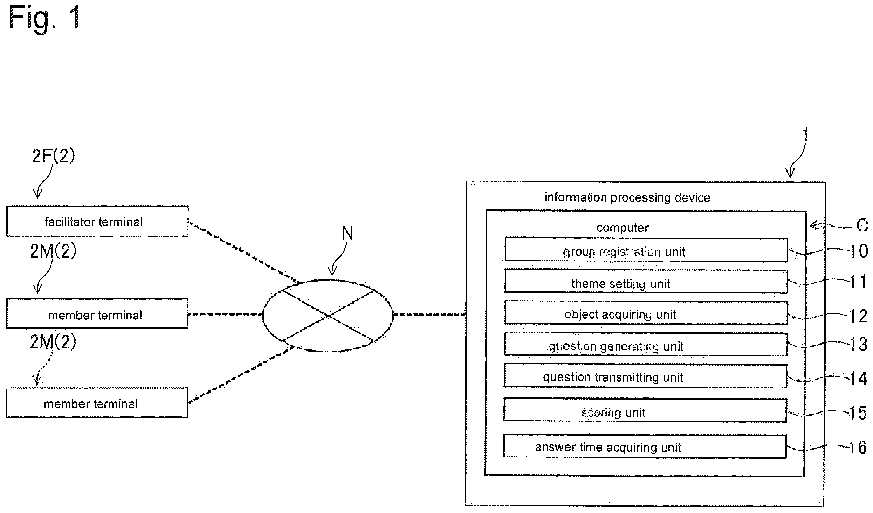

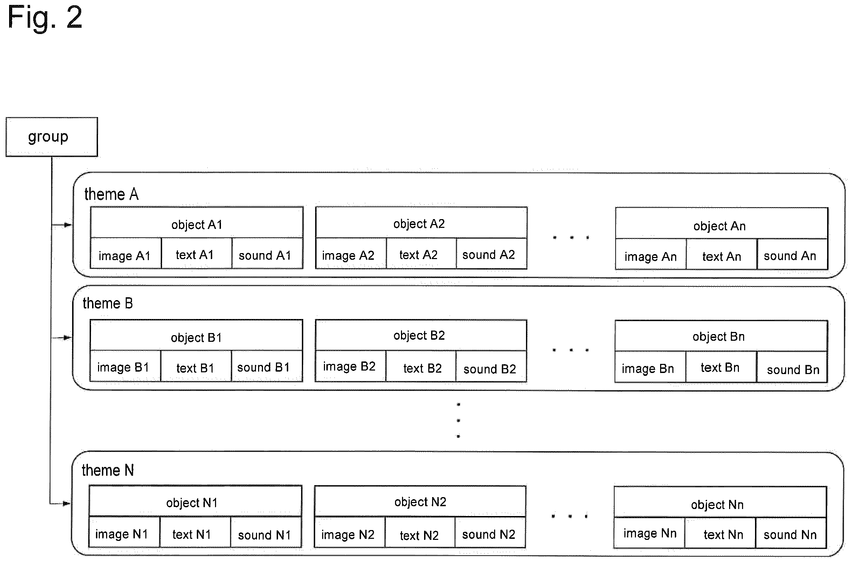

Fig. 1 is a block diagram showing an information processing device 1 according to the present embodiment. Fig. 2 is a diagram illustrating that a plurality of objects can be acquired for each of a plurality of themes.

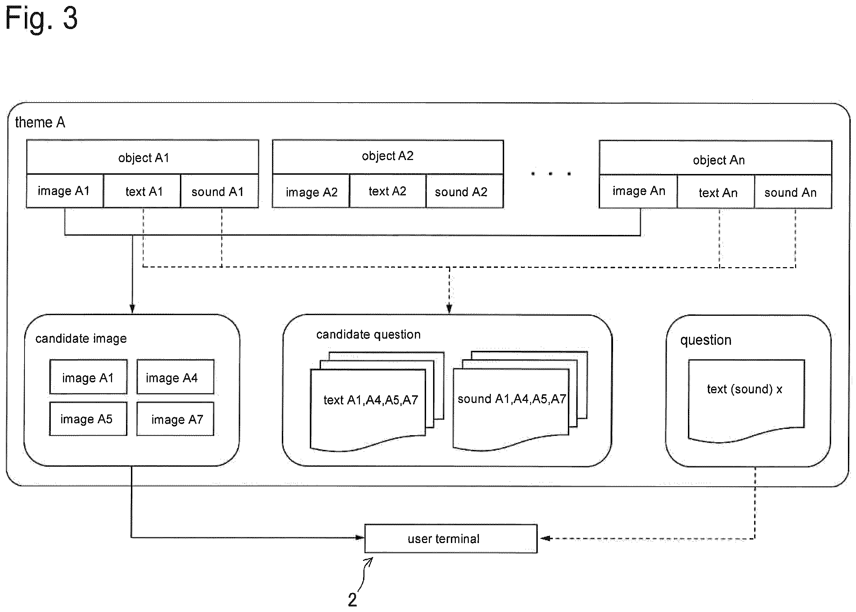

Fig. 3 is a diagram explaining that the questions generated in accordance with a plurality of objects are sent to the user terminal 2. As shown in Figs. 1 to 3, the information processing device 1 is a device that generates a question, transmits the question to a user's user terminal 2, and evaluates the user's answer to the question. More specifically, the information processing device 1 generates questions based on images, texts, and sounds that represent mutually related contents. The questions generated by the information processing device 1 are, for example, so-called "karuta" style questions that have adopted a format which allows a user to select an appropriate image based on at least one of text and sound. However, if there are a plurality of users, the specification may be such that a correct answer is not necessarily to be limited to a user who answered correctly and most quickly, but it is also possible to adopt a specification which allows a correct answer of a user who answered secondly or later.

Here, "user" is one who uses the information processing device 1. A user can utilize the information processing device 1 by accessing the information processing device 1 through the user terminal 2. Users include facilitators and members. In other words, users include at least those classified as facilitators and those classified as members. A "facilitator" is, for example, a person who is positioned as an administrator when using the information processing device 1. A "member" is, for example, a person who uses the information processing device 1 according to instructions from a facilitator. The number of facilitators and members may be one or more. An example here is illustrated in which there is one facilitator and two members.

The facilitator selects (nominates) members. The facilitator and the members selected by the facilitator constitute a group. Here, "group" is a group of users working on a common question.

The facilitator uses the facilitator terminal 2F. Here, the "facilitator terminal" is a user terminal 2 of the facilitator, and may be the facilitator's personal belongings, or may be one temporarily lent to the facilitator. Members use member terminals 2M. Here, the "member terminal" is the member's user terminal 2, and may be the member's personal belongings, or may be one temporarily lent to the member.

An "object" is an individual piece of content. Each object includes images, texts, and sounds representing interrelated contents. The "image" may be a still image such as a photograph or an illustration, or a moving image. "Text" is character information, and may include font decorations such as font type, color, or size. "Sound" may be a sound or a voice. When a sound is a voice, the voice may be a recorded human voice or a mechanically synthesized voice.

For each object, a text contains a content that describes the content of an image. Furthermore, in each object, a sound contains a content that explains the content of an image. Here, a sound may contain a content of a text read out aloud, or may not contain a content of a text read out aloud.

The term "theme" means items to which a plurality of objects are associated, and may be themes common to multiple objects. Here, multiple themes are set, and multiple objects related to each theme exist for each theme. Specifically, there are themes A to N. For example, theme A has a plurality of objects A1 to An, and similarly, theme N has a plurality of objects N1 to Nn. On the other hand, the number of objects for respective themes may be different from each other.

In respective themes, the images included in respective objects are different from each other, the texts included in respective objects are different from each other, and the sounds included in respective objects are also different from each other. Namely, images, texts, and sounds have different contents from one object to another. In other words, images, texts, and sounds have a one-to-one relationship. Namely, each object is unique within a theme. For example, object A1 of theme A includes an image A1, text A1, and sound A1, and object An of theme A includes an image An, text An, and sound An.

For example, each theme may be "animal", "bird", "hyakunin Isshu", and the like. If a theme is "animal", an object related to the theme may be a content that represents "dog," "cat," "lion," and the like. If an object is a content representing a "lion", an image of the object may be a "photo of a lion", and a text of the object may be "a large carnivore belonging to the cat family", and the sound of the object may be a voice that reads "a large carnivorous animal belonging to the cat family." On the other hand, even if the text of such an object is "a large carnivorous animal belonging to the cat family," the sound of the object may be a voice read-out which is "an animal called the king of beasts whose male has grown a mane".

The information processing device 1 is comprised of a computer C (server) that can communicate with the user terminal 2 and the like via a network. The information processing device 1 includes, as a physical configuration, a control arithmetic device, a storage device, and an input/output device. The control arithmetic device is constituted by a controller such as a CPU (Central Processing Unit), and performs an arithmetic processing and controls a storage device and an input/output device. The storage device includes, for example, a main storage device and an auxiliary storage device. The main storage device is composed of, for example, RAM (Random Access Memory). Further, the auxiliary storage device is constituted by, for example, a ROM (Read Only Memory). The input/output device includes, for example, an input device that receives data from the outside and sends such data to the storage device, and also includes an output device that outputs the calculation result calculated by the control calculation unit and stored in the storage device.

The information processing device 1 executes a predetermined process by, for example, loading a program stored in a ROM into a RAM, and executing the program loaded into the RAM by a CPU. Specifically, the information processing device 1 loads an information processing program stored in the ROM into the RAM, and executes the information processing program loaded into the RAM by the CPU, thereby executing a question generation process (to be described later). On the other hand, the computer C constituting the information processing device 1 may physically have a configuration different from the above-described configuration.

The user terminal 2 is configured to be able to communicate with the information processing device 1 and the like. The user terminal 2 is operated, for example, by a user. The user terminal 2 may be, for example, a smartphone, a tablet, a notebook computer, a desktop computer and the like. Here, a smartphone is exemplified as the user terminal 2. On the other hand, as described above, the user terminal 2 includes the facilitator terminal 2F and the member terminal 2M.

The user terminal 2 has a physical configuration including a control arithmetic device, a storage device, and an input/output device. The control arithmetic device is constituted by a controller such as a CPU, performs an arithmetic processing, controls the storage device and the input/output device. The storage device includes, for example, a main storage device and an auxiliary storage device. The main storage device is composed of, for example, a RAM. Further, the auxiliary storage device is constituted by, for example, a ROM. The input/output device includes, for example, an input device that receives data from the outside and sends data to the storage device, also includes an output device that outputs the calculation result calculated by the control calculation unit and stored in the storage device.

The user terminal 2 executes a predetermined process by, for example, loading a program stored in the ROM into the RAM, and executing the program loaded into the RAM by the CPU. On the other hand, the user terminal 2 may physically have a configuration different from the configuration described above.

Next, the functions of the information processing device 1 will be explained. Functionally, the computer C of the information processing device 1 includes a group registration unit 10, a theme setting unit 11, an object acquisition unit 12, a question generation unit 13, a question transmitting unit 14, and a scoring unit 15.

The group registration unit 10 registers users and the like who use the information processing device 1. First, the group registration unit 10 registers an organization. An "organization" may be a company, school, club and the like to which users who use the information processing device 1 belong. A plurality of users may belong to an organization.

The group registration unit 10 also registers facilitators. A facilitator is selected from users who belong to organizations registered in the group registration unit 10. For example, the group registration unit 10 may register, as a facilitator, a user who has registered an organization. Alternatively, the group registration unit 10 may register a person designated by the user as a facilitator when or after the organization is registered.

Additionally, the group registration unit 10 registers members. Members are selected from users belonging to organizations registered in the group registration unit 10. For example, the group registration unit 10 may register, as members, all users belonging to the organization excluding the facilitator. Alternatively, the group registration unit 10 may register, as a member, a person designated by the user when or after the organization is registered. In particular, the group registration unit 10 may also register those nominated by the facilitator as members. Here, the group registration unit 10 not only registers members as an initial setting, but also may register additional members later. The group registration unit 10 may register a plurality of members once at the same time, or may register respective members individually.

Additionally, the group registration unit 10 registers groups of users. Specifically, the group registration unit 10 registers facilitators and members as a group. For example, the group registration unit 10 may register, as a group, the facilitators and the members selected (nominated) by the facilitator.

The theme setting unit 11 sets a theme for a question. The theme setting unit 11 can set a plurality of themes. Here, the theme setting unit 11 can set a plurality of themes from theme A to theme N. The theme setting unit 11 sets each theme for each group registered by the group registration unit 10.

The object acquisition unit 12 acquires a plurality of objects collected by user regarding the theme set by the theme setting unit 11. When a plurality of themes are set by the theme setting unit 11, the object acquisition unit 12 acquires a plurality of objects for each of the plurality of themes set by the theme setting unit 11. The object acquisition unit 12 may acquire an object by receiving, from the user terminal 2, information (image, text, and sound) obtained by a user such as a member through conducting an investigation on a theme. In this case, a user may conduct the investigation alone, or a plurality of users may conduct the investigation jointly. The object acquisition unit 12 records the acquired object in the storage device of the information processing device 1. Specifically, the object acquisition unit 12 creates a table for recording objects for each theme, and records the acquired objects in the created table.

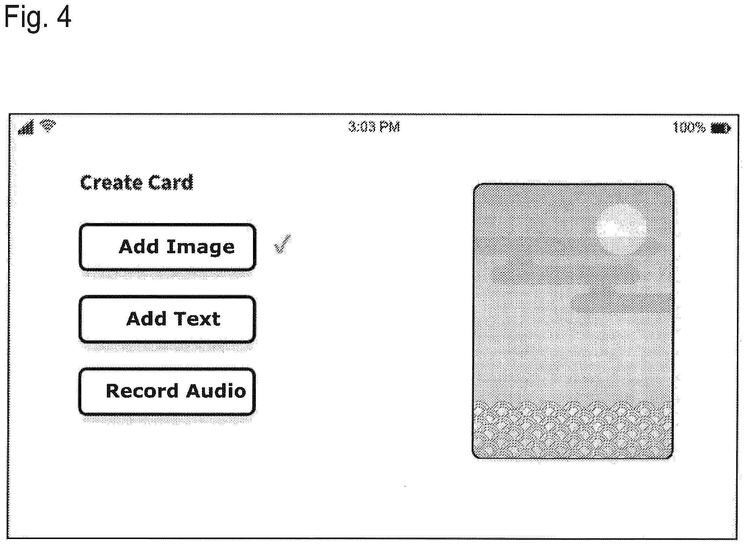

Fig. 4 is a diagram showing an example of an image registration screen for registering the image of an object. The image registration screen shown in Fig. 4 is, for example, displayed on the display of the user terminal 2. Then, when the user operates the user terminal 2, the image of the object is registered in the object acquisition unit 12 via the user terminal 2. For example, an image stored in the storage device of the user terminal 2 may be used as an image.

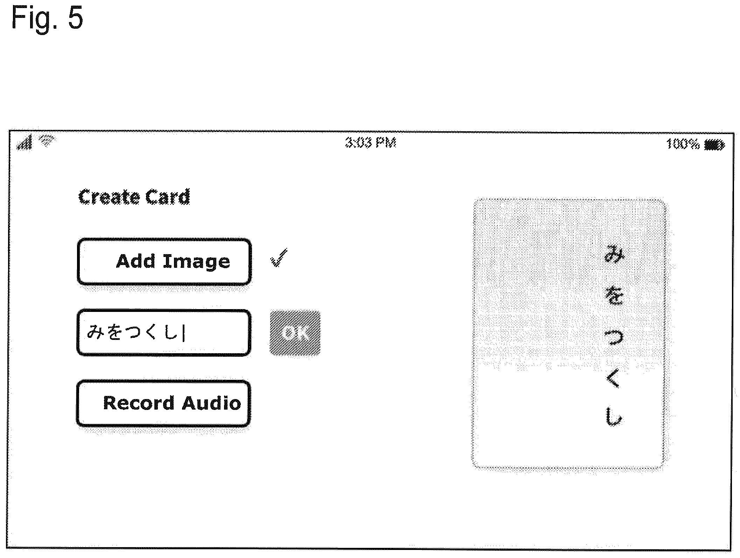

Fig. 5 is a diagram showing an example of a text registration screen for registering the text of an object. The text registration screen shown in Fig. 5 is, for example, displayed on the display of the user terminal 2. Then, when the user operates the user terminal 2, the text of the object can be registered in the object acquisition unit 12 via the user terminal 2. Further, the text may be, for example, created and input by user.

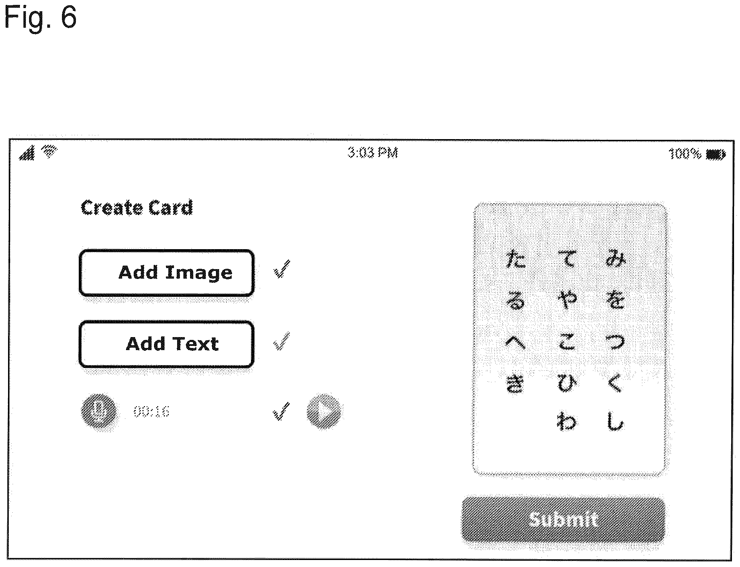

Fig. 6 is a diagram showing an example of a sound registration screen for registering the sound of an object. The sound registration screen shown in Fig. 6 is, for example, displayed on the display of the user terminal 2. Then, when the user operates the user terminal 2, the sound of the object can be registered in the object acquisition unit 12 via the user terminal 2. On the other hand, the user's voice may be collected from the microphone of the user terminal 2, or it is also possible to use the sound stored in the storage device of the user terminal 2.

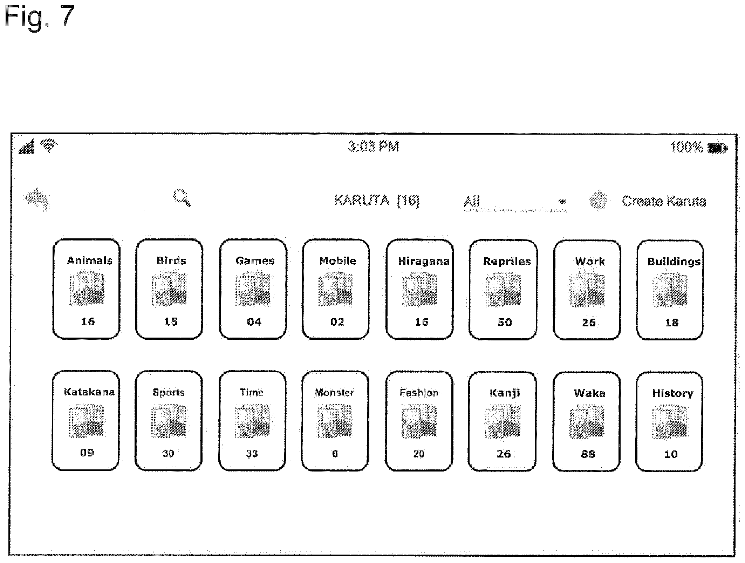

Fig. 7 is a diagram showing an example of a theme list screen that displays the themes which have already been set, together with the number of objects acquired for each theme. The theme list screen shown in Fig. 7 is an image that displays a list of the number of objects collected for each question theme set by the theme setting unit 11. The theme list screen is, for example, displayed on the display of the user terminal 2. When an icon representing each respective theme is selected, screen can be transited to a screen for registering image, text, and sound for each object shown in Figs. 4 to 6.

Refurring back to Figs. 1 to 3, the question generation unit 13 generates questions based on the plurality of objects acquired by the object acquisition unit 12. Since each respective objects include image, text, and sound representing interrelated contents, the question generation unit 13 can generate questions based on the image, text, and sound representing interrelated contents.

Here, "question" includes a question and a plurality of candidate images. One of a plurality of candidate images is an answer (correct answer) to the question. The questions may be questions whose contents are intended to support the learning of learners, or may be questions whose contents are intended to be used for the amusement of an answerer, or questions whose contents are intended to be used for other purposes. "Candidate images" are answer options including images. A candidate image may include a text and the like in addition to an image. A "question" is information that presents a clue for selecting an answer from among a plurality of candidate images, and is one of the candidate questions. A "candidate question" is a question candidate, and is composed of text and sound included in an object corresponding to a candidate image. Among the candidate questions, those included in an object related to an answer are considered questions.

Each candidate image is an image included in each object. The candidate images may be images of all objects, or may be images of some objects included in all objects. Further, it is also possible to include the candidate images other than the images of each respective objects.

Specifically, the question generated by the question generation unit 13 shows the user the text and sound included in any one of the plurality of objects, and is constituted in a format that allows the user to select an image contained in the object from among the plurality of candidate images. Namely, the questions adopt a so-called "karuta" format in which a user is caused to select an appropriate image in accordance with text and sound. On the other hand, questions are such that only any one of text and sound contained in any one of multiple objects is needed to be shown to a user. In an example shown in Fig. 3, theme A is such that images A1, A4, A5, A7 of objects A1, A4, A5, A7 are set as candidate images, while the texts A1, A4, A5, A7 and the sounds A1, A4, A5, A7 are set as candidate questions. A question (at least one of text X and sound X) is selected from these candidate questions. On the other hand, a process for showing the user the questions generated by the question generation unit 13 is executed by the question transmission unit 14 (which will be described later).

The question transmitting unit 14 transmits the questions generated by the question generating unit 13 to the user terminal 2. More precisely, the question transmitting unit 14 transmits the question to the facilitator terminal 2F (which is the user terminal 2 of a facilitator) registered in a group, and to the member terminal 2M (which is the user terminal 2 of a member registered in the group). In addition, the question transmitting unit 14 outputs an information (about a time when the question was transmitted to the user terminal 2) to an answer time acquisition unit 16.

. The scoring unit 15 obtains (receives) the user's answers to the questions from the user terminal 2. The "answer content" is the content of the user's answer to the question, and specifically, it is an information indicating an image selected by the user from a plurality of candidate images (which the user believes can match at least one of the text and sound), all in accordance with at least one of the text and sound played on user terminal 2. In addition, the scoring unit 15 outputs to the answer time acquisition unit 16 an information regarding the time when the answer contents are obtained from the user terminal 2.

When the scoring unit 15 obtains the user's answer to a question, it is determined whether the acquired answer is correct. For example, the scoring unit 15 compares the image indicated by the acquired answer content with the image included in the object pertaining to the question sent to the user terminal 2. If the images match each other, the scoring unit 15 determines that the user's answer is correct, and if the images do not match each other, the scoring unit 15 determines that the user's answer is incorrect (not correct).

The scoring unit 15 sends the judgment result of the correctness of the user's answer to the user terminal 2. For example, the scoring unit 15 may send the judgment result of the correctness of one user's answer to only the user terminal 2 of that user, or to the facilitator terminal 2F in addition to the user terminal 2 of that user, or to the user terminals 2 of all users.

The scoring unit 15 may acquire the user's answers to the questions for each user and determine the correctness or incorrectness of the acquired answers for each user. In other words, the scoring unit 15 may judge the correctness of other users' answers regardless of the result of judging the correctness of one user's answer. In this case, it is possible that multiple users' answers may be judged to be correct. Alternatively, when the scoring unit 15 obtains the user's answer to a question and determines whether it is correct, it is allowable to consider only the first user answer (whose answer content is determined to be lawful) as the correct answer, and not allow the correct answers from the second and subsequent users.

The answer time acquisition unit 16 acquires a user's answer time. The "answer time" is a time period required to answer a question from a time when the question is sent to the user terminal 2 by the question transmission unit 14 to a time when the answer is obtained by the scoring unit 15. The answer time may be a time period from a time when the question is sent to user terminal 2 by the question transmission unit 14 to a time when the answer content is retrieved by the scoring unit 15. Alternatively, an answer time may be a time period from a time when a question is received by user terminal 2 by the question transmission unit 14 to a time when an answer content is transmitted to the information processing device 1 by user terminal 2. In addition, an answer time may be a time that approximates the above-mentioned time.

When the answer time acquisition unit 16 has acquired answer times for each of multiple users, comparison is performed among the answer times of each respective users. Then, the answer time acquisition unit 16 transmits the comparison results (e.g., ranking) of the answer time of each respective users to the user terminal 2. At this time, the answer time acquisition unit 16 may extract the answer times of users who answered the questions correctly and compare the answer times of the extracted users (i.e., users who answered the questions correctly) among themselves. At this time, the answer time acquisition unit 16 may position, as the winner, a user with the shortest answer time among the users who answered the question correctly. If multiple questions are sent to user terminal 2, the answer time acquisition unit 16 may acquire the total answer time by adding up the answer times for these respective questions

### [Information Registration Process]

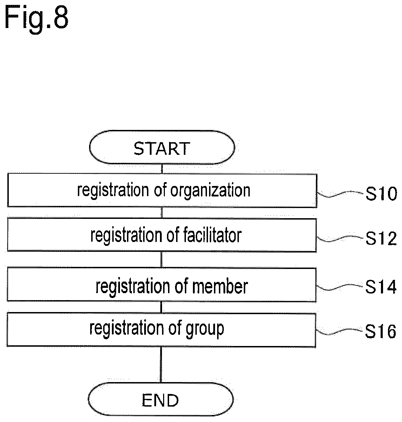

This part of the specification will describe an information registration process executed by the information processing device 1. Fig. 8 is a flowchart showing the information registration process executed by the information processing device 1. The information registration process shown in Fig. 8 is the information processing method for registering organizations, facilitators, members, groups and the like in the system, which is realized as a process of computer C.

In step S10, the group registration unit 10 of the information processing device 1 registers an organization. The group registration unit 10 also registers users belonging to the organization. Then, in step S12, the group registration unit 10 registers facilitators. For example, the group registration unit 10 registers a person nominated by a user belonging to the registered organization (as a facilitator). Then, in step S14, the group registration unit 10 registers members. For example, the group registration unit 10 registers a person selected from users belonging to the registered organization (as a member). The information registration process then moves to step S16.

In step S16, the group registration unit 10 of the information processing device 1 registers a group of users. Specifically, the group registration unit 10 registers facilitators and members as a group.

### [Theme and Object Registration Process]

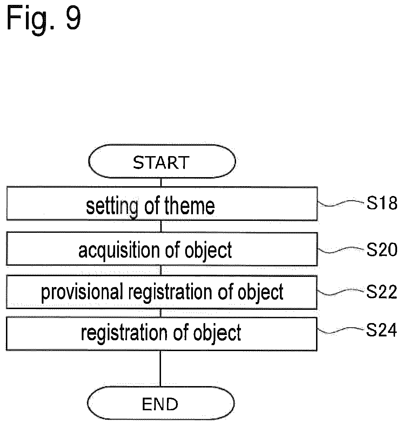

This part of the specification will describe the theme and object registration process executed by information processing device 1. Fig. 9 is a flowchart showing the theme and object registration process executed by the information processing device 1. The theme and object registration process shown in Fig. 9 is the information processing method for registering themes and objects to the system, which is realized as a process of computer C.

In step S18, the theme setting unit 11 sets a theme for a question (theme setting step). The theme setting unit 11 can set multiple themes. Here, the theme setting unit 11 sets multiple themes from theme A to theme N. The theme setting unit 11 sets theme for each group registered by the group registration unit 10. Subsequently, the theme and object registration process moves to step S20.

In step S20, the object acquisition unit 12 of the information processing device 1 acquires a plurality of objects collected by the user with respect to the theme set in the theme setting step (object acquisition step). When multiple themes have been set by the theme setting unit 11, the object acquiring unit 12 acquires multiple objects for each of the multiple themes set by the theme setting unit 11. The object acquisition unit 12 may acquire objects by receiving information (image, text, and sound) obtained by a user, such as a member, for example, from the user terminal 2 after conducting an investigation on the theme. In this case, the user may conduct the investigation alone or jointly by multiple persons. The theme and object registration process then moves to step S22.

In step S22, the object acquisition unit 12 of the information processing device 1 performs provisional (temporary) registration of the acquired object. For example, the object acquisition unit 12 performs provisional registration for objects collected by members. In the subsequent step S24, the object acquisition unit 12 performs registration (main registration) of the object that has been provisionally registered. For example, the object acquisition unit 12 may perform registration of objects that have been collected by members and have been provisionally registered upon approval by the facilitator.

### [Question Generation and Submission Process]

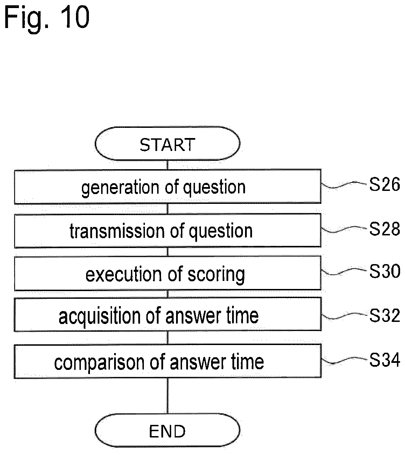

This part of the specification describes the question generation and submission process executed by the information processing device 1. Fig. 10 is a flowchart showing the process of generating and submitting questions, executed by the information processing device 1. The question generation and submission process shown in Fig. 10 is an information processing method that generates questions, transmits them to the user's terminal 2, and evaluates the user's answers to the questions. The method is realized as a process of computer C.

In step S26, the question generation unit 13 of the information processing device 1 generates questions in accordance with a plurality of objects obtained by the object acquisition unit 12 (question generation step). Since each object includes an image, text, and sound representing interrelated contents, the question generation unit 13 generates questions based on the image, text, and sound representing inter-related contents. Specifically, the question generation unit 13 generates a question in a format that indicates to the user the text and sound contained in any one of the plurality of objects and allows the user to select an image contained in that object from a plurality of candidate images. Afterwards, the question generation and submission process moves to step S28.

In step S28, the question transmission unit 14 of the information processing device 1 transmits the question generated in the question generation step to the user terminal 2 (question transmission step). In addition, the question transmission unit 14 outputs information (regarding the time at which the question was transmitted to the user terminal 2) to the answer time acquisition unit 16. Subsequently, the question generation and submission process moves to step S30.

In step S30, the scoring unit 15 of the information processing device 1 acquires (receives) the user's answers to the questions from the user terminal 2. After acquiring the user's answers to the questions, the scoring unit 15 determines whether the acquired answers are correct (scoring step). The scoring unit 15 sends the judgment result of the correctness or incorrectness of the user's answers to the user terminal 2. The scoring unit 15 may acquire the user's answers to the questions for each user and judge the correctness or incorrectness of the acquired answers for each user. At this time, there may be cases where multiple users' answers are judged to be correct. In addition, the scoring unit 15 outputs information (regarding the time when the answer contents are acquired from the user terminal 2) to the answer time acquisition unit 16. Afterwards, the question generation and submission process moves to step S32.

In step S32, the answer time acquisition unit 16 of the information processing device 1 acquires the user's answer time, in accordance with a time period from a time when the question is transmitted to the user terminal 2 by the question transmission unit 14 to a time when the answer contents are acquired by the scoring unit 15 (answer time acquisition step). Then, in step S34, the answer time acquisition unit 16 performs a comparison among the answer times of respective users when answer times are acquired for respective multiple users. Subsequently, the answer time acquisition unit 16 transmits the comparison result (e.g., ranking) of the answer time for each user to the user terminal 2. This completes the question generation and submission process.

### [Information Processing Program]

This part of the specification describes the information processing program for making computer C to function as information processing device 1. The information processing program is a program that causes computer C to execute a process of generating questions, transmitting them to the user's user terminal 2, and evaluating the user's answers to those questions.

The information processing program includes: a main module; a theme setting module; an object acquisition module; a question generation module; a question transmission module; a scoring module; and an answer time acquisition module. The main module comprehensively controls the computer C. The theme setting module, object acquisition module, question generation module, question transmission module, scoring module, and answer time acquisition module may be respectively executed to provide predetermined functions. These functions are similar to the functions of the theme setting unit 11, the object acquisition unit 12, the question generation unit 13, the question transmission unit 14, the scoring unit 15, and answer time acquisition unit 16. In other words, the information processing program is a program that causes computer C to function as the theme setting unit 11, the object acquisition unit 12, the question generation unit 13, the question transmission unit 14, the scoring unit 15, and the answer time acquisition unit 16.

. The information processing program may also have a group registration module. The functions realized by having the information processing program which executes the group registration module are the same as those of the group registration unit 10.

### [Actions and Effects]

As explained above, the information processing device 1 is an information processing device 1 that generates questions, transmits the questions to the user's user terminal 2, and evaluates the user's answers to those questions. The information processing device 1 comprises: a theme setting unit 11 for setting a theme for a question, an object acquisition unit 12 for acquiring a plurality of objects collected by the user on the theme set by the theme setting unit 11, a question transmitting unit 14 that transmits the questions generated by the question generating unit 13 to the user terminal 2; a scoring unit 15 that acquires the user's answer to the question from the user terminal 2 and determines whether the obtained answer is correct; an answer time acquisition unit 16 that acquires an answer time related to a time period starting from a time when the question is transmitted to the user terminal 2 by the question transmission unit 14 until a time when the answer content is acquired by the scoring unit 15. Each of the plurality of objects includes an image, text, and sound representing inter-related contents.

The information processing program is an information processing program that causes computer C to execute a process of generating a question, transmitting the question to user terminal 2 of a user, and evaluating the user's answer to that question, wherein the computer C can function as having the following units, including:
a theme setting unit 11 for setting a theme for a question;
an object acquisition unit 12 for acquiring a plurality of objects collected by the user with respect to the theme set by the theme setting unit 11;
a question generation unit 13 for generating questions based on the plurality of objects acquired by the object acquisition unit 12;
a question transmission unit 14 for transmitting the questions generated by the question generation unit 13 to the user terminal 2;

a scoring unit 15 that obtains the user's answer to the question from the user terminal 2 and determines whether the obtained answer is correct; and
an answer time acquisition unit 16 that obtains an answer time, which is a time period from when the question is sent to the user terminal 2 by the question transmission unit 14 until the answer content is obtained by the scoring unit 15.

Here, each of the plurality of objects includes an image, text, and sound representing interrelated contents.

The information processing method is an information processing method for generating a question, transmitting the question to the user's user terminal 2, and evaluating the user's answer to the question, the method comprising:
a theme setting step for setting a theme for a question;
an object acquisition step for acquiring a plurality of objects collected by a user with respect to the theme set in the theme setting step;
a question generating step that generates a question based on the plurality of objects acquired in the object acquisition step;
a question transmitting step for transmitting the questions generated in the question generating step to the user terminal 2;
a scoring step of acquiring the user's answer to the question from the user terminal 2 and determining whether the acquired answer is correct; and
an answer time obtaining step for obtaining an answer time related to a time period starting from a time when the question is sent to the user terminal 2 in the question transmitting step until an answer content is obtained in the scoring step.

Here, each of the plurality of objects includes an image, text, and sound representing interrelated contents.

According to at least any one of the information processing device 1, information processing program, and information processing method, a plurality of objects related to a theme (that has been set) are collected by a user. Then, questions are generated based on the plurality of collected objects, and the generated questions are presented to the user. When the user's answers to the questions are obtained from the user terminal 2, the correctness of the answers is determined and the answer time required by the user is also obtained. This makes it possible to obtain the correctness of each user's answers to the questions and the answer time, making it possible for users to compete with each other based on the percentage of correct answers and the answer time. Here, each object includes an image, text, and sound that represent contents related to each other. Therefore, questions and answers to questions can be generated by combining not only images but also text and sound related to the images. This makes it possible to create a rich variation of image-related questions.

Also, according to at least any one of the information processing device 1, information processing program, and information processing method, it is possible for users such as students to summarize the results of their studies by voluntarily collecting materials and organizing the collected materials in an appropriate manner. In addition, in the process of organizing and summarizing materials, users can be trained to express ideas and information through conceptualization, abstraction, and materialization. Furthermore, by having users to compete with each other based on the percentage of correct answers and answer time, the users themselves can enjoy the fun of playing with the game elements while at the same time consolidating the contents of the deliverables they have compiled as knowledge. Therefore, at least any one of information processing device 1, information processing program, and information processing method can be used by a user (who is a student) as a learning material, so that the user can use it to summarize the results of his/her independent study, and can use the results summarized by the user to consolidate knowledge. Further, the user can also use the results to consolidate his/her knowledge.

In the information processing device 1, a question is configured in a format that indicates to the user at least one of text and sound contained in any one of a plurality of objects, and causes the user to select an image contained in that object from a plurality of candidate images. In this way, it is possible to generate questions in a format that allows the user to select an appropriate image based on at least one of the text and sound. As an example, it is possible to generate questions in the form of a so-called "karuta" .

In the information processing device 1, each of the plurality of candidate images is an image contained in each of the plurality of objects. This makes it possible to specifically realize the actions and effects of the present disclosure described above.

In the information processing device 1, the text includes a description explaining the contents of image. Accordingly, it is possible to specifically realize the above-mentioned actions and effects of the present disclosure.

In the information processing device 1, the sound contains a description of the contents of an image. Accordingly, the above-mentioned actions and effects of the present disclosure can be specifically realized.

In the information processing device 1, the sound includes the content of the text read out loud. Accordingly, the above-mentioned actions and effects of the present disclosure can be specifically realized.

In the information processing device 1, the images included in each of the plurality of objects are different from each other, and the texts included in each of the plurality of objects are different from each other, and the sounds included in each of the plurality of objects are different from each other. Accordingly, for example, when at least any one of the text and the sound is a question, the image that is an answer to the question can be determined to be one.

In the information processing device 1, the theme setting unit 11 can set multiple themes, and the object acquisition unit 12 acquires multiple objects for each of the multiple themes set by the theme setting unit 11. Accordingly, it is possible to generate a collection of questions containing different questions for each theme.

In the information processing device 1, the user includes a facilitator and members, and has a group registration unit 10 that registers the facilitator and the members selected by the facilitator as a group. The question transmission unit 14 transmits the questions to the facilitator terminal 2F which is a user terminal 2 of the facilitator registered as a group, and to the member terminal 2M which is the user terminal 2 of the members registered as the group. In this way, by dividing the roles of users into facilitators and members, it is possible to manage groups appropriately.

### [Modified Embodiments]

The embodiments described above can be implemented in various forms with modifications or improvements based on the knowledge of those skilled in the art.

For example, in the embodiments described above, the scoring unit 15 obtains the user's answer to a question and determines whether the obtained answer is correct. However, the scoring unit 15 does not have to selectively judge the user's answer to be correct or incorrect. For example, the scoring unit 15 may judge the user's answers using a point reduction method, such as the number of points out of 100, or the scoring unit 15 may judge the user's answers using a point addition method without setting an upper limit to the number of points.

When multiple questions are sent to user terminal 2 and the total answer time for each of these questions is acquired by the answer time acquisition unit 16, the answer time acquisition unit 16 may acquire a time weighted appropriately for each question or each user as the total answer time.

In the embodiments described above, the question transmission unit 14 may be capable of transmitting a combination of a question and its answer to the user terminal 2 and the like, in addition to transmitting the question in the procedure shown in the question generation application process described above. In this way, it is possible for a user to perform a learning independently by seeing and hearing the questions and their answers in accordance with the theme.

## Claims

1. An information processing device that generates a question, transmits the question to a user's terminal, and evaluates a user's answer to the question, said device comprising:
a theme setting unit for setting a theme for the question;
an object acquisition unit that acquires a plurality of objects collected by the user, in relation to the theme set by the theme setting unit;
a question generating unit that generates a question in accordance with the plurality of objects acquired by the object acquisition unit;
a question transmitting unit that transmits the question generated by the question generating unit to the user terminal; and
a scoring unit that acquires the user's answer to the question from the user terminal and determines whether the acquired answer is correct,
wherein a plurality of the objects respectively contain images, texts, and sounds representing interrelated contents.

2. The information processing device according to claim 1, wherein the question is constituted in a format which shows the user the text or sound included in any one of the plurality of objects, and allows the user to select an image to be included in the object, from a plurality of candidate images.

3. The information processing device according to claim 2, wherein the plurality of candidate images are respectively the images included in the plurality of the objects.

4. The information processing device according to claim 1, wherein the text includes contents explaining the content of the image.

5. The information processing device according to any one of claims 1 to 4, wherein the sound includes content explaining the content of the image.

6. The information processing device according to any one of claims 1 to 5, wherein the sound includes content read out from the text.

7. The information processing device according to any one of claims 1 to 6, wherein
the images included in the plurality of objects are different from each other,
the texts included in the plurality of objects are different from each other,
the sounds included in the plurality of objects are different from each other.

8. The information processing device according to any one of claims 1 to 7, wherein
the theme setting unit is capable of setting a plurality of themes,
the object acquisition unit acquires a plurality of objects for each of the plurality of themes set by the theme setting unit

9. The information processing device according to any one of claims 1 to 8, further comprising an answer time acquisition unit that acquires an answer time starting from a time when the question is transmitted by the question transmission unit to the user terminal to a time when the answer content is acquired by the scoring unit.

10. The information processing device according to any one of claims 1 to 9, wherein
the users include facilitators and members;
the information processing device further includes a group registration unit that registers the facilitator and the members selected by the facilitator as a group,
the question transmitting unit transmits the question to a facilitator terminal that is the user terminal of the facilitators registered as a group and a member terminal that is a user terminal of the members registered as the group.

11. An information processing program that causes a computer to execute a process of generating a question, transmitting the question to a user's terminal, and evaluating the user's answer to the question,
wherein the computer is used to function as the following units:
a theme setting unit for setting a theme for a question;
an object acquiring unit for acquiring a plurality of objects collected by the user with respect to the theme set by the theme setting unit;
a question generating unit for generating a question in accordance with the plurality of the objects acquired by the object acquiring unit;
a question transmitting unit for transmitting the question generated by the question generating unit to the user terminal;
a scoring unit that obtains the user's answer to the question from the user terminal and determines whether the obtained answer is correct;
wherein each of a plurality of said objects includes an image, text, and sound representing interrelated contents.

12. An information processing method that generates a question, transmits the question to a user's user terminal, and evaluates a user's answer to the question, said method comprising:
a theme setting step for setting a theme for a question;
an object acquisition step that acquires a plurality of objects collected by the user, in relation to the theme set in the theme setting step;
a question generating step that generates the question in accordance with the plurality of objects acquired in the object acquisition step;
a question transmitting step that transmits the question generated in the question generating step to the user terminal; and
a scoring step that acquires the user's answer to the question from the user terminal and determines whether the acquired answer is correct,
wherein a plurality of the objects respectively contain images, texts, and sounds representing interrelated contents.
